# EUROPEAN PATENT APPLICATION

(11) **EP 1 246 125 A2**
(43) Date of publication of application: **02.10.2002**
(21) Application number: 02002583.9
(22) Date of filing: 04.02.2002
(51) Int. Cl.: G06K 11/18, G06K 11/20, G06K 11/08

(54) **An optical mouse having an integrated processor**

(30) Priority: 28.03.2001 US 821180
(71) Applicant: Agilent Technologies, Inc. (a Delaware corporation), Palo Alto, CA 94303 (US)
(72) Inventor: Misek, Brian J., Fort Collins, CO 80526 (US); Anderson, Mark A., Fort Collins, CO 80524-3313 (US); Wallace, Hugh, Fort Collins, CO 80525 (US)
(74) Representative: Schoppe, Fritz, Dipl.-Ing.

(57) **Abstract**

An optical mouse integrated circuit includes:
a unitary substrate (10);
an optical sensor (12) generating data;
an analog-to-digital converter (14) receiving and processing the data;
a microprocessor (16) receiving the processed data; and
memory (18,20) connected to the microprocessor;
   wherein the optical sensor, analog-to-digital converter, microprocessor, and memory are formed on the unitary substrate.

## Description

### Field of the Invention

The invention is directed towards the field of computer input devices, in particular towards the field of optical mice.

### BACKGROUND

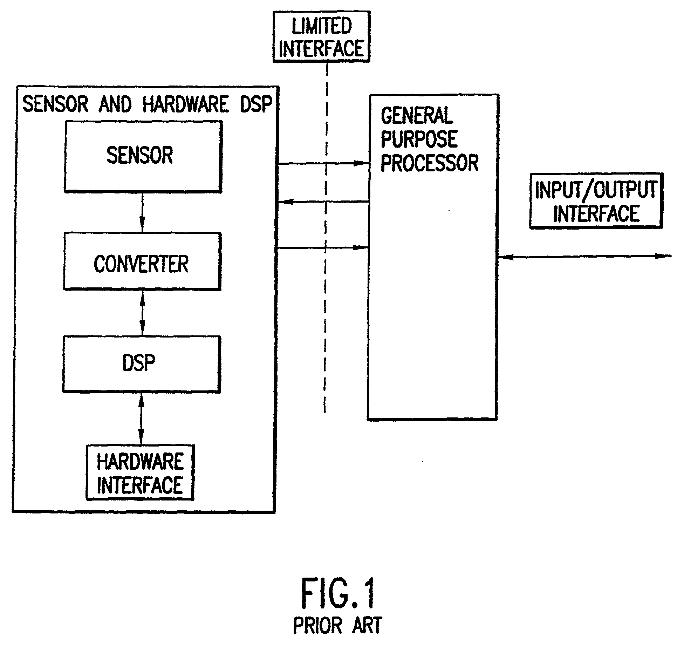

Prior art optical mice have been discrete systems, as shown in Figure 1. One integrated circuit (IC) includes an optical sensor, analog-to-digital converter, and digital signal processor while a second IC includes a general purpose processor. With this two chip solution and the cost constraints on mice the interface is limited to a few signals and the amount of data bandwidth that is available for communication of variables and data is limited. This limit of the interface causes the prior art to rely on fixed digital signal processing algorithms and minimal movement reports. The cost of implementing different algorithms in hardware is high and leads to inflexibility for the end customer. The limited information bandwidth between the two chips prohibits the use of the separate microprocessor as the navigation engine. This causes the customizing of the digital signal processing to impossible and the use of adaptive algorithms is precluded. In addition to navigation inflexibility there is insufficient bandwidth present to allow the user to manipulate the tracking engines hardware to implement power saving operations that need to modify the tracking parameters in real time. While the use of the 2 chip solution has yielded a usable mouse the need for customization of the mouse to provide low power and/or higher performance with more flexibility necessitates a change in the architecture.

### SUMMARY

An integrated circuit for optical navigation includes an optical sensor, an analog-to-digital (A/D) converter, a microprocessor, and memory integrated into a unitary substrate. The optical sensor generates analog surface data. The A/D converter converts the analog surface data into digital surface data. The microprocessor manages the surface data. Memory, both programmable and RAM, is included for additional data processing.

The microprocessor manages the navigation operations of the mouse. The microprocessor may include a digital signal processor, a hardware controller, or an input/output controller. As these functions are incorporated into the microprocessor, the user may customize features such as navigation parameters, user interface operations and power savings.

### BRIEF DESCRIPTION OF THE DRAWINGS

Figure 1 illustrates an example of the prior art.

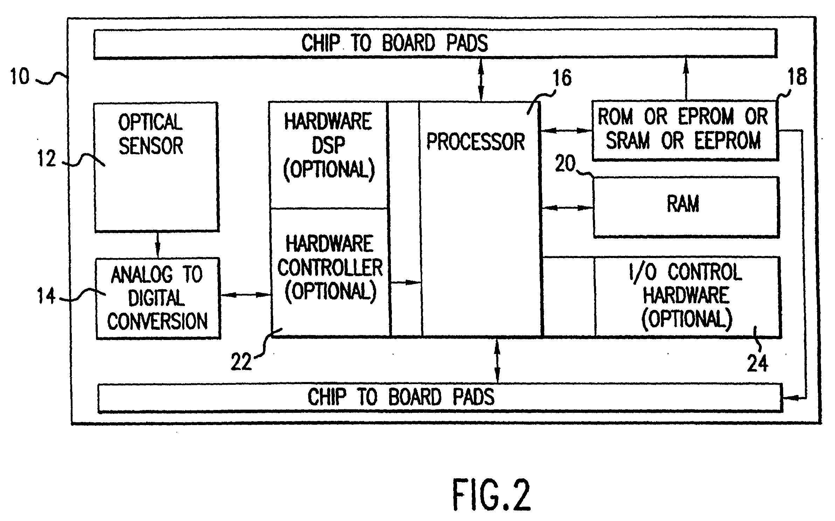

Figure 2 illustrates a preferred embodiment of the invention.

### DETAILED DESCRIPTION

Figure 1 illustrates a preferred embodiment of an optical mouse. On a unitary substrate 10, the optical mouse integrated circuit includes an optical sensor 12, an analog-to-digital converter 14, a microprocessor 16, random access memory 18, and programmable memory 20. An optional digital signal processor 22 interposes the analog-to-digital converter 14 and the microprocessor 16. An optional hardware controller 24 may interpose the analog-to-digital converter 14 and the microprocessor 16 or the functionality of hardware controller 24 may be designed into the microprocessor 16. The microprocessor 16 may also include an input/output controller 26.

Within a single integrated circuit, an optical sensor transmits data that describes a surface to an analog-to-digital (A/D) converter. A microprocessor bidirectionally communicates with random access memory (RAM), programmable memory, and the A/D converter. The programmable memory may be ROM, EPROM, SRAM, EEPROM or any combination of these. In the embodiment shown, an optional hardware controller and an optional digital signal processor have been added to the microprocessor. The integrated circuit further includes input/output pads for communication.

The single or multi-thread microprocessor alone or with optional digital signal processing hardware can control key parameters of the sensor electronics and perform the digital signal processing required for tracking surfaces. The processor, alone or in conjunction with optional digital hardware, further executes the input and output functions needed for mouse operation. As this functionality is incorporated into the mouse, it may range from providing movement information in a quadrature manner or implementing very complex I/O standard interface, e.g. USB, PS2, or SPI interfaces. Additional functionality includes built in self test for ease of production testing, algorithms for motion detection and custom filtering , power saving mode, etc. The user may customize the mouse operation.

## Claims

1. An optical mouse integrated circuit comprising:
an unitary substrate (10);
an optical sensor (12) generating data;
an analog-to-digital converter (14) receiving and processing the data;
a microprocessor (16) receiving the processed data; and
memory (18, 20) connected to the microprocessor;
wherein the optical sensor, analog-to-digital converter, microprocessor, and memory are formed on the unitary substrate.

2. An optical mouse integrated circuit, as defined in claim 1, further comprising a digital signal processor (22) interposing the analog-to-digital converter and the microprocessor.

3. An optical mouse integrated circuit, as defined in claim 2, the digital signal processor further including a hardware controller (24).

4. An optical mouse integrated circuit, as defined in claim 1, further comprising a hardware controller interposing the analog-to-digital converter and the microprocessor.

5. An optical mouse integrated circuit, as defined in claim 1, the microprocessor further including an input/output controller (26).

6. An optical mouse integrated circuit, as defined in claim 5, further comprising a digital signal processor interposing the analog-to-digital converter and the microprocessor.

7. An optical mouse integrated circuit, as defined in claim 6, the digital signal processor further including a hardware controller.

8. An optical mouse integrated circuit, as defined in claim 1, wherein the memory is programmable memory (20).
